# FASCICULE DE BREVET EUROPEEN

(11) **EP 0 493 233 B1**
(45) Date de publication et mention de la délivrance du brevet: **04.09.1996**
(21) Numéro de dépôt: 91403506.8
(22) Date de dépôt: 20.12.1991
(51) Int. Cl.: H04L 12/56

(54) **Commutateur de transit d'un réseau asynchrone, notamment un réseau ATM**
Durchgangsvermittlungsstelle für ein asynchrones Netz, insbesondere für ein ATM-Netz
Ansynchronous network transit switch, especially for ATM network

(30) Priorité: 20.12.1990 FR 9015998
(43) Date de publication de la demande: 01.07.1992
(73) Titulaire: THOMSON-CSF, 75008 Paris (FR)
(72) Inventeur: Grenot, Thierry, F-92045 Paris la Défense (FR)
(74) Mandataire: Lincot, Georges

(56) Documents cités:
- EP-A- 0 126 196
- BE-A- 904 100

## Description

L'invention se rapporte à un commutateur de transit d'un réseau de communication rapide par paquets utilisant la technique de transmission asynchrone, notamment un réseau asynchrone de type dit ATM (Asynchronous Transfert Mode : mode de transfert asynchrone).

Un réseau de communication rapide par paquets (cellules dans la terminologie ATM) comprend une pluralité de commutateurs reliés entre eux par des artères à haut débit, les commutateurs reliant une pluralité de terminaux d'extrémités. Parmi les commutateurs du réseau, on distingue les commutateurs d'extrémité reliés directement aux terminaux d'extrémité dans lesquels sont mises en forme les cellules à partir des signaux engendrés par des terminaux émetteurs et les commutateurs dits commutateurs de transit dans lesquels les cellules mises en forme, ayant transité par des artères du réseau, sont brassées pour être aiguillées à destination d'un ou plusieurs commutateurs de transit ou d'extrémité.

Dans les commutateurs d'extrémités, tels que ceux décrits par exemple dans la demande de brevet EP-A- 0126 196, les cellules sont mises en forme de manière à être constituées d'une partie entête et d'une partie données d'informations, la partie entête ou index identifiant un terminal destinataire vers lequel les données d'informations contenues dans la cellule en question doivent être acheminées. Les cellules constituées dans un commutateur d'extrémité sont ensuite transférées via une artère à un commutateur de transit qui est relié à une pluralité de canaux émetteurs de cellules et à une pluralité de canaux récepteur de cellules. Cependant la lecture dans ces commutateurs de la partie index nuit à la rapidité du transfert des cellules. On comprendra que les commutateurs de transit constituent le coeur du réseau et doivent par conséquent répondre à des critères sévères de rapidité, de fiabilité et de modularité. On peut également imaginer des commutateurs ayant la double fonction extrémité et transit.

Le but de l'invention est de pallier les inconvénients précités en proposant un commutateur de transit qui permet de brasser automatiquement et rapidement les cellules arrivant par les canaux émetteurs pour les transférer sur les canaux récepteurs afin d'acheminer chaque cellule reçue d'une extrémité du réseau vers une autre extrémité du réseau. Elle a aussi pour but un commutateur de transit qui soit facile à réaliser et qui met en oeuvre une technologie connue.

A cet effet, l'invention a pour objet, un commutateur de transit d'un réseau asynchrone, notamment un réseau ATM, pour le brassage d'informations sous forme de cellules ayant une partie entête d'identification de destination et une partie données d'informations, comprenant
une pluralité de joncteurs d'entrée pour recevoir des cellules provenant de canaux d'entrée associés ;
une pluralité de joncteurs de sortie reliés aux joncteurs d'entrée par un bus synchrone et à des canaux de sortie pour transférer une cellule d'un canal d'entrée vers au moins un canal de sortie via le bus synchrone ; caractérisé en ce que pour émettre une cellule vers au moins un joncteur de sortie, chaque joncteur d'entrée est configuré pour émettre lors d'un premier cycle un marquant sur une ligne spécifique pour activer le ou les joncteurs de sortie correspondant et émettre suivant un deuxième cycle la cellule sur le bus synchrone, la cellule ainsi transmise n'étant prélevée que par les seuls joncteurs de sortie qui ont été activés lors du premier cycle.

D'autres caractéristiques et avantages de l'invention apparaîtront encore mieux à la lecture de la description qui suit d'un mode de réalisation préférentiel de l'invention donné à titre d'exemple uniquement et se référant aux dessins annexés dans lesquels :
- la figure 1 est une représentation schématique de la structure d'un commutateur de transit selon l'invention ;
- la figure 2 représente la structure de l'information brasée dans le commutateur de transit selon l'invention.

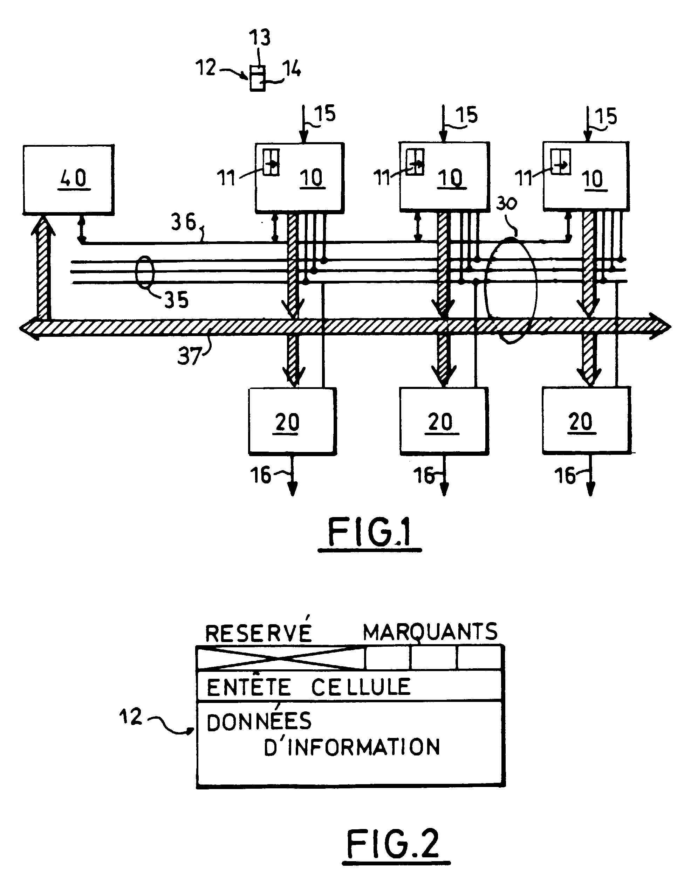

Sur la figure 1, le commutateur de transit est construit autour d'un bus 30 interconnectant une pluralité de joncteurs d'entrée 10 et une pluralité de joncteurs de sortie 20 dont seulement six ont été représentés. La connexion par bus des joncteurs confère au commutateur de transit une grande modularité puisque le nombre de joncteurs ainsi reliés peut être augmenté ou réduit facilement.

Les joncteurs d'entrée 10 sont alimentés en cellules via des canaux émetteurs 15 associés, lesquelles sont diffusées sur des canaux de sortie 16 reliés aux joncteurs de sortie 20 associés via la bus 30, les canaux d'entrée et de sortie 15, 16 constituant les artères d'un réseau asynchrone tel qu'un réseau ATM. Les joncteurs d'entrée incluent un moyen d'adaptation physique de canal d'entrée choisi en fonction de la nature du canal (fibre, câble optique, faisceau hertzien, ...) un moyen de récupération des cellules arrivant par flot sur un canal d'entrée, un moyen de mise en file d'attente de ces cellules avant leur transfert sur le bus d'interconnexion et un moyen interface de bus. Les joncteurs de sortie incluent, quant à eux, un moyen d'adaptation de canal de sortie et un moyen interface de bus équivalent à ceux des joncteurs d'entrée, un moyen de mise en file d'attente des cellules avant leur transfert sur un canal de sortie. Ces différents moyens, non représentés sur cette figure, sont bien connus de l'homme de l'art et ne seront pas décrits plus en détail ci-après.

Il faut comprendre que les joncteurs d'entrée et les joncteurs de sortie sont constitués autour de mécanismes de traitement de données permettant un débit d'information nettement plus élevé que le rythme d'échange d'information dans le réseau. Par conséquent, une partie des mécanismes de traitement de données dans les joncteurs peut être commandée par un rythme d'horloge interne au commutateur de transit et fonctionner en mode synchrone avec le bus.

Un allocateur 40 de bus est relié au bus synchrone 30. L'allocateur 40 de bus comprend des moyens (non représentés) pour détecter une activité sur le bus synchrone 30 et a pour fonction d'allouer le bus à un des joncteurs d'entrée 10, par exemple selon un principe de priorité fixe ou tournante, les joncteurs de sortie 20 étant eux toujours à l'écoute du bus synchrone.

L'allocateur 40 de bus est relié aux joncteurs d'entrée 10 par une liaison spécifique 36, incorporée ou non au bus. L'allocateur 40 du bus synchrone reçoit des joncteurs d'entrée 10, via la liaison 36, des requêtes d'allocation du bus et fournit en réponse aux joncteurs d'entrée 10, via cette liaison spécifique 36, une autorisation d'accès au bus. En réponse à une autorisation d'accès au bus, un joncteur d'entrée 10 engendre une information de marquage (marquant) préalablement élaboré à partir de l'entête d'une cellule à brasser et d'une table de traduction 11 interne à chaque joncteur d'entrée ou commune à tous les joncteurs d'entrée. La table de traduction est une table de correspondance à une entrée correspondant à une entête de cellule. Pour chaque entête de cellule, la table de traduction renvoie à une référence de joncteur de sortie (marquant), et un nouvel en-tête de cellule.

Les joncteurs de sortie 20 sont reliés chacun à une ligne spécifique 35 par laquelle transite le marquant engendré par un joncteur d'entrée 10. Selon l'invention, le marquant est un élément binaire, et il y a un marquant par joncteur de sortie. En se reportant à la figure 2, on a représenté shématiquement l'information brassée par un commutateur de transit. Cette information se présente sous la forme de messages formés par les joncteurs d'entrée 10 et comprennant une partie réservée pour véhiculer des informations de service locales au commutateur de transit, les marquants associés à chaque joncteur de sortie, la partie entête de la cellule et la partie données d'informations de la cellule. En revenant à la figure 1, chaque joncteur d'entrée 10 est relié à trois lignes spécifiques telles que 35 tandis que chaque joncteur de sortie 20 est relié à une ligne spécifique 35, différente pour tous les joncteurs de sortie. On comprendra que par les lignes 35, un joncteur d'entrée peut activer sélectivement un joncteur de sortie en engendrant un marquant sur une ligne spécifique du joncteur de sortie mais il peut aussi activer plusieurs ou tous les joncteurs de sortie en engendrant un marquant sur chaque ligne spécifique des joncteurs de sortie en question. Dans ce dernier cas, une cellule d'entrée est diffusée vers une pluralité de canaux de sortie.

Nous allons maintenant décrire le fonctionnement du commutateur de transit selon l'invention lorsqu'une cellule 12 se présente à l'entrée d'un joncteur d'entrée 10, via le canal d'entrée 15. Cette cellule comporte une partie entête 13 indicative d'une adresse de destination et une partie 14 de données d'information. En réponse à la réception de la cellule 12, le joncteur d'entrée envoie à l'allocateur 40 du bus synchrone 30, via la liaison 36, une requête de prise du bus et se met en attente d'une réponse de l'allocateur. Dès que le joncteur d'entrée reçoit de l'allocateur 40 une autorisation de prise du bus 30, il engendre une information de marquage (marquant) préalablement élaboré à partir de la partie entête de la cellule et de la table de traduction 11. Le marquant engendré est représentatif d'un joncteur de sortie 20 par lequel la cellule doit être transférée. Le joncteur d'entrée 10 envoie le marquant sur une ligne spécifique 35 pour activer, dans un premier cycle fourni par l'horloge du commutateur, le joncteur de sortie 20 en question. Le joncteur de sortie 20, toujours à l'écoute de sa ligne spécifique 35, reçoit le marquant et prélève dans un second cycle, la cellule transférée consécutivement sur une partie 37 du bus par le joncteur d'entrée 10. Le joncteur de sortie 20, ayant pris la cellule, l'envoie sur son canal de sortie 16 associé. On pourra prévoir que le cycle d'allocation pour le transfert d'une cellule se déroule pendant le transfert d'une cellule précédente via le bus 30 afin d'augmenter encore le débit du commutateur de transit. Par ailleurs, on comprendra que le nombre de lignes spécifiques 35 est au moins égal au nombre de joncteurs de sortie puisqu'il y a un marquant (élément binaire) par joncteur de sortie, pour permettre un transfert direct de la cellule via le bus 30. On peut également prévoir d'utiliser la partie du bus 37 pour véhiculer les marquants (au lieu des lignes 35) puisque la diffusion des marquants se passe avant le transfert de la cellule.

## Revendications

1. Un commutateur de transit d'un réseau asynchrone, notamment un réseau ATM, pour le brassage d'informations sous forme de cellules ayant une partie entête d'identification de destination et une partie données d'informations, comprenant
une pluralité de joncteurs d'entrée (10) pour recevoir des cellules provenant de canaux d'entrée (15) associés ;
une pluralité de joncteurs de sortie (20) reliés aux joncteurs d'entrée par un bus synchrone (30) et à des canaux de sortie (16) pour transférer une cellule d'un canal d'entrée vers au moins un canal de sortie via le bus synchrone (37) ;
caractérisé en ce que pour émettre une cellule vers au moins un joncteur de sortie, chaque joncteur d'entrée est configuré pour émettre lors d'un premier cycle un marquant sur une ligne spécifique (35) pour activer le ou les joncteurs de sortie correspondant et émettre suivant un deuxième cycle la cellule sur le bus synchrone (37), la cellule ainsi transmise n'étant prélevée que par les seuls joncteurs de sortie qui ont été activés lors du premier cycle.

## Patentansprüche

1. Transitvermittlungsstelle eines asynchronen Netzes, insbesondere eines ATM-Netzes, für die Verteilung von Informationen in Form von Zellen, die einen Zielidentifizierungs-Kopfteil und einen Informationsteil aufweisen,
- mit einer Vielzahl von Eingangsverbindern (10), um von zugeordneten Eingangskanälen (15) kommende Zellen zu empfangen,
- mit einer Vielzahl von Ausgangsverbindern (20), die mit den Eingangsverbindern über einen synchronen Bus (30) und mit Ausgangskanälen (16) verbunden sind, um eine Zelle von einem Eingangskanal zu mindestens einem Ausgangskanal über den synchronen Bus (37) zu übertragen,
dadurch gekennzeichnet, daß jeder Eingangsverbinder, um eine Zelle zu mindestens einem Ausgangsverbinder zu senden, so konfiguriert ist, daß er in einem ersten Zyklus eine Markierung auf eine spezifische Leitung (35) sendet, um den oder die entsprechenden Ausgangsverbinder zu aktivieren und in einem zweiten Zyklus die Zelle auf den synchronen Bus (37) zu senden, wobei die so übertragene Zelle nur von den Ausgangsverbindern entnommen wird, die während des ersten Zyklus aktiviert wurden.

## Claims

1. Transit switch of an asynchronous network, notably an ATM network, for the cross-connecting of information elements in the form of cells having a header part for the identification of a destination and an information data part, comprising
- a plurality of input junctors (10) to receive cells coming from associated input channels (15);
- a plurality of output junctors (20) connected to the input junctors by a synchronous bus (30) and to output channels (16) to transfer a cell from an input channel to at least one output channel via the synchronous bus (37);
characterized in that in order to send a cell to at least one output junctor, each input junctor is configured so as to send, during a first cycle, a marker on a specific line (35) so as to activate the corresponding output junctor or junctors and to send the cell over the synchronous bus (37) in accordance with a second cycle, the cell thus transmitted being picked up only by the output junctors alone which were activated during the first cycle.
